(19) Europäisches Patentamt / European Patent Office / Office européen des brevets

(11) **EP 4 475 052 B1**

(12) **EUROPEAN PATENT SPECIFICATION**

(45) Date of publication and mention
of the grant of the patent:
**18.02.2026 Bulletin 2026/08**

(21) Application number: **24180873.2**

(22) Date of filing: **07.06.2024**

(51) International Patent Classification (IPC):
**G06Q 10/0631** *(2023.01)*

(52) Cooperative Patent Classification (CPC):
**G06Q 10/0631**

(54) **METHOD AND APPARATUS WITH FLEXIBLE JOB SHOP SCHEDULING**

VERFAHREN UND VORRICHTUNG MIT FLEXIBLER ARBEITSGESCHÄFTSPLANUNG

PROCÉDÉ ET APPAREIL AVEC PLANIFICATION FLEXIBLE DE MAGASIN DE TRAVAIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.06.2023 CN 202310679972**

(43) Date of publication of application:
**11.12.2024 Bulletin 2024/50**

(73) Proprietor: **Samsung Electronics Co., Ltd.**
**Suwon-si, Gyeonggi-do 16677 (KR)**

(72) Inventors:
 • **HE, Mengting**
  **16677 Suwon-si (KR)**
 • **ZHANG, Tao**
  **16677 Suwon-si (KR)**
 • **WEI, Bo**
  **16677 Suwon-si (KR)**
 • **LUO, Jing**
  **16677 Suwon-si (KR)**
 • **HUANG, Xiaoyu**
  **16677 Suwon-si (KR)**
 • **TONG, Mengfei**
  **16677 Suwon-si (KR)**
 • **ZHU, Feng**
  **16677 Suwon-si (KR)**
 • **LEE, Hojae**
  **16677 Suwon-si (KR)**
 • **LUO, Lihao**
  **16677 Suwon-si (KR)**
 • **YANG, Yifei**
  **16677 Suwon-si (KR)**

(74) Representative: **Arnold & Siedsma**
**Bezuidenhoutseweg 57**
**2594 AC The Hague (NL)**

(56) References cited:
**CN-A- 109 270 904      CN-A- 112 149 987
CN-A- 115 509 188      CN-B- 113 093 673
CN-B- 113 748 468      CN-B- 114 139 637**

 • **HU DAPENG ET AL: "An improved reinforcement
learning approach to solve flow job scheduling
problems", 2020 IEEE 22ND INTERNATIONAL
CONFERENCE ON HIGH PERFORMANCE
COMPUTING AND COMMUNICATIONS; IEEE
18TH INTERNATIONAL CONFERENCE ON
SMART CITY; IEEE 6TH INTERNATIONAL
CONFERENCE ON DATA SCIENCE AND
SYSTEMS (HPCC/SMARTCITY/DSS), IEEE, 14
December 2020 (2020-12-14), pages 538 - 544,
XP033906815, DOI: 10.1109/HPCC-SMARTCITY-
DSS50907.2020.00067**

**Description**

**BACKGROUND**

**1. Field**

The present disclosure relates to the intelligent manufacturing technology field, and more specifically, to a method and apparatus with flexible job shop scheduling.

**2. Description of Related Art**

Production scheduling is one of the core topics in manufacturing systems. Production scheduling generally focuses on allocating available production materials/equipment to each production task and determining appropriate job sequences to achieve optimal production goals while satisfying various constraint conditions of the production process. The most typical modeling of the production scheduling problem is the Job Shop Scheduling Problem (JSSP), where one group of machines has to process one group of tasks, each task has multiple job steps, each job step can be followed by a certain machine according to a given processing time, and each machine can only process one job step at the same time. In a real scenario, to improve production efficiency, there are often multiple candidate machines for a given job step and one of the candidate machines needs to be selected to process the given job step. The problem in this scenario is called a flexible job shop scheduling problem (Flexible JSSP, FJSSP), which is an extension of the job shop scheduling problem, has abundant application scenarios such as semiconductor production, automobile production, and professional customer service, and has significant commercial value.

However, with increasingly complex jobs, flexible job shops have more complex and variable scheduling conditions, which makes it more difficult to achieve effective flexible job shop scheduling.

Document CN 113 093 367 B discloses a method for optimizinf workshop job scheduling by using an average field action value. Document XP 033906851 relates to the problem of flow job shop scheduling.

**SUMMARY**

The purpose of the present disclosure is to provide a flexible job shop scheduling method and a flexible job shop scheduling apparatus.

According to one aspect, a Flexible Job Shop scheduling method includes: obtaining a shop scheduling state including at least one of a sequential order dependency relationship between job tasks being processed, a sequential order dependency relationship between operation steps in each job task of the job tasks, a processing/being processed relationship between the job tasks and machines, or mutual constraint relationships between the machines; representing the shop scheduling state as a state hypergraph; extracting a hypergraph-based job feature from the state hypergraph using a hypergraph neural network; and determining an action configured to change the shop scheduling state, wherein the action is determined according to the hypergraph-based job feature using a policy network.

The determining an action to change the shop scheduling state according to the hypergraph-based job feature may include: combining the hypergraph-based job feature and a sequential order dependency relationship-based job feature corresponding to the shop scheduling state into a combined job feature; and determining the action by inputting the combined job feature to the policy network.

The determining the action by inputting the combined job feature into the policy network may include: splicing the hypergraph-based job feature into a hypergraph-based machine feature according to the processing/being processed relationship between the job tasks and the machines; combining the hypergraph-based machine feature and a machine feature based on a machine constraint relationship corresponding to the shop scheduling state into a combined machine feature; splicing the combined machine feature and the combined job feature into a candidate decision action feature; and determining the action by inputting the candidate decision action feature into a decision network.

The may further include: generating a state hypergraph feature based on the state hypergraph by averaging the hypergraph-based job feature; and splicing the candidate decision action feature and the state hypergraph feature and inputting spliced feature into a value network to obtain a state value of a current state.

The machine feature based on the machine constraint relationship may be extracted based on: establishing a machine constraint graph by using a simple graph based on the shop scheduling state, wherein the machine constraint graph represents the mutual constraint relationships between the machines; and extracting the machine feature based on the machine constraint relationships from the machine constraint graph using a first graph neural network.

The job feature based on the sequential order dependency relationship may be extracted based on: establishing a job relation graph by using a non-hyper graph based on the shop scheduling state, wherein the job relation graph represents the sequential order dependency relationship between the job tasks being processed; and extracting the job feature based on the sequential order dependency relationship from the job relation graph by using a second graph neural network.

The policy network may include a k-nearest neighbors graph to reduce a set of candidate actions generated in the determining the action.

The policy network may include a policy network that is either a double-delay deep deterministic policy gradient algorithm or a proximity policy optimization algorithm based on an Actor-Critic architecture.

In another general aspect, a flexible job shop scheduling apparatus includes: one or more processors; and storage storing instructions configured to, when executed by the one or more processors, cause the one or more processors to: obtain a shop scheduling state including at least one of a sequential order dependency relationship between job tasks being processed, a dependent relationship between operation steps in each job task of the job tasks, a processing/being processed relationship between the job tasks and machines, or mutual constraint relationships between the machines; represent the shop scheduling state as a state hypergraph and extract a hypergraph-based job feature from the state hypergraph using a hypergraph neural network; and determine an action configured to change the shop scheduling state, wherein the action is determined based on a state feature according to the hypergraph-based job feature using a policy network.

In another general aspect, a method performed by one or more computing devices includes: using a hypergraph to model a manufacturing process of physical job steps performed by physical machines, wherein the physical machines are represented by respectively corresponding machine representations, wherein the physical job steps are represented by respectively corresponding job step representations, and wherein each of the machine representations has a respectively corresponding hyperedge in the hypergraph.

Each hyperedge may have a first side including one or more of the job step representations and a second side including one or more of the job step representations.

Some of the hyperedges may connect multiple job representations on one side thereof with one or more job representations on the other side thereof.

An order of the physical job steps performed by the physical machines may be determined based on the hypergraph.

A schedule may indicate which of the job step representations are to be performed by which of the machine representations, and the schedule may be changed based on the hypergraph, and wherein the order of the physical job steps performed by the physical machines is determined based on the changed schedule.

## BRIEF DESCRIPTION OF THE DRAWINGS

The above and other purposes and features of the present disclosure will become clearer from the following disclosure in conjunction with the accompanying drawings exemplarily showing an example, in which:

FIG. 1 shows a flexible job shop scheduling method, according to one or more embodiments.

FIG. 2 shows a state hypergraph, according to one or more embodiments.

FIG. 3 shows a method for determining an action to change a shop scheduling state, according to one or more embodiments.

FIG. 4 shows a flexible job shop scheduling method, according to one or more embodiments.

FIG. 5 shows a feature extraction network, according to one or more embodiments.

FIG. 6 shows a decision network, according to one or more embodiments.

FIG. 7 shows a flexible job shop scheduling method, according to one or more embodiments.

FIG. 8 shows a flexible job shop scheduling apparatus, according to one or more embodiments.

FIG. 9 shows a flexible job shop scheduling system, according to one or more embodiments.

Other features and aspects will be apparent from the following detailed description, the drawings, and the claims.

Throughout the drawings and the detailed description, unless otherwise described or provided, it may be understood that the same or like drawing reference numerals refer to the same or like elements, features, and structures. The drawings may not be to scale, and the relative size, proportions, and depiction of elements in the drawings may be exaggerated for clarity, illustration, and convenience.

## DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

For understanding, prior flexible job shop scheduling methods are described first. The embodiments and examples described herein may not necessarily solve all problems in the prior flexible job shop scheduling methods.

Prior flexible job shop scheduling methods and their shortcomings are discussed next.

Priority rules based methods. Methods for calculating scheduling relationships through priority rules are simple, easy to operate, and fast. However, the rules need to be designed based on the experience of experts and an optimal solution cannot be explored for a scenario. This type of method is applicable to a single search target and the calculation results are limited.

Meta-heuristic methods. Methods for searching a scheduling relationship through heuristic/meta-heuristic scheme may allow an optimal solution suitable for a search target to be found through autonomous search. However, heuristic methods may have significant performance problems because it involves searching the entire solution space from the beginning of the scheduling. As the scale of job scheduling problems increases, the time consumption of heuristic algorithms increases significantly and they are not suitable for large-scale systems or for systems that might require real-time scheduling.

Reinforcement learning methods. Methods based on deep reinforcement learning have been used to solve the job shop scheduling problem. However, with these methods, the observed states often explicitly encode the number of tasks, type, or number of machines, etc., the problem scale is also small, and the methods are not extensible for different problem scales. When combining a disjunctive graph and a graph network, these methods can be extended for different scales. With the disjunctive graph it is difficult to model more complex flexible job shop scheduling problems, consequently the graph network and the reinforcement learning method has not been successfully applied to solve the flexible job shop scheduling problem. If the flexible job shop scheduling problem is modeled according to the idea of solving the shop scheduling problem with reinforcement learning, the state space will be extremely large, train is difficult, and it is not scalable. Flexible shop scheduling based on reinforcement learning indirectly models by combining the priority rules, that is, by determining one rule among several predetermined priority rules through reinforcement learning. While this solution may provide priority rule solutions, there may be inability to directly search for a relatively optimal solution in a large space and machine combination spaces. There has been no reinforcement learning solution to the problem of finding a scheduling order by directly modeling the complex and variable scheduling state of a flexible job shop.

To address shortcomings of the previous technology, in one or more embodiments of the present disclosure, a hypergraph-based job feature may be extracted from a state hypergraph corresponding to a shop scheduling state by using a hypergraph neural network. An action to change the shop scheduling state may be determined by combining the hypergraph-based job feature with a policy network, which may allow modeling of complex dynamic scheduling scenarios with excellent scalability. A hypergraph-based state feature and a sequential job order dependency relationship-based job feature can be used together in a policy network, which may improve accuracy and effectiveness of the flexible job shop scheduling. In addition, some embodiments may reduce the set of potential candidate actions using k-nearest neighbors graphs (KNNGs), which may improve calculation efficiency by reducing the amount of computation for determining an action. In addition, the method for determining the action to change the shop scheduling state may improve the accuracy and effectiveness of the flexible job shop scheduling because combination-capable machine feature and combined job feature are used together in the policy network. In addition, the current state determined by the policy network may be evaluated by inputting, into the value network, a candidate decision action feature and a feature obtained by splicing a state hypergraph feature, so the current state determined by the decision network can be better assessed, which may encourage the policy network to make better decisions.

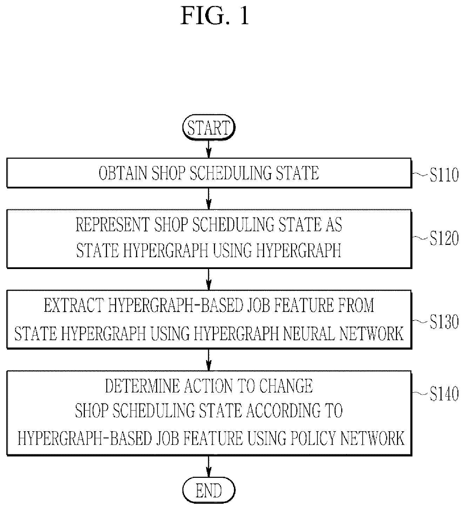

FIG. 1 shows a flexible job shop scheduling method, according one or more embodiments.

Referring to FIG. 1, In step S110, a shop scheduling state may be obtained. The shop scheduling state may include at least one of a sequential order dependency relationship between job tasks being processed, a sequential order dependency relationship between operation steps in each job task of the job tasks, a processing/being processed relationship between the job tasks and machines, or a mutual constraint relationship between the machines.

In step S120, the shop scheduling state is represented as a state hypergraph (a form of hypergraph).

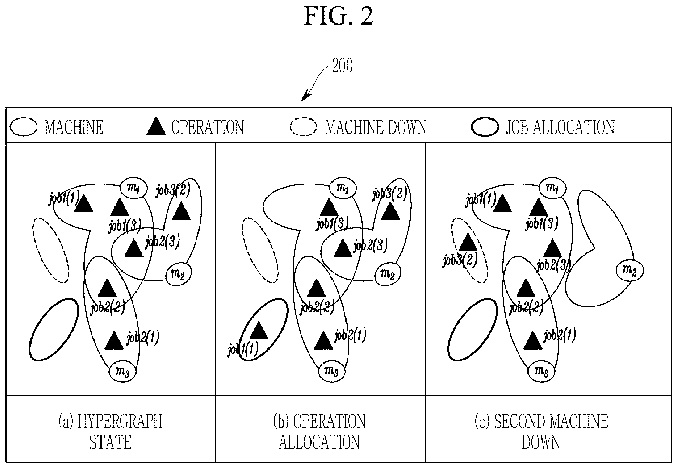

Mathematically, a hypergraph is generally a graph in which edges may be associated with more than one point/node at each side. In a simple non-hyper graph, an edge may be associated with two points. In a hypergraph, an edge (also called a hyperedge) may be associated with three or more points. That is, each edge in a simple graph may connect only two points, but in a hypergraph, each hyperedge may be connected to more than two points, so the hypergraph may be more flexible. A state hypergraph is described with reference to FIGS. 2A, 2B, and 2C.

In step S130, a hypergraph-based job feature may be extracted from the state hypergraph by using a hypergraph neural network.

The hypergraph neural network may be implemented by extending a graph neural network. The hypergraph neural network may model and analyze hypergraphs so that a hypergraph's complex non-linear structural data may be better handled. Compared with a conventional graph neural network, the hypergraph neural network may handle multivariate relationships and higher-order relationships and show better performance in some applications. The hypergraph neural network may process hypergraphs (e.g., the state hypergraph) of different sizes and shapes and may perform embedding learning and representation learning on nodes and hyperedges in a hypergraph. There are two main types of hypergraph neural networks: a message passing-based hypergraph neural network and a graph convolution network-based hypergraph neural network. However, the hypergraph neural network according to an example embodiment of the present disclosure is not limited thereto and may be any other type of the hypergraph neural network.

The extraction of the hypergraph-based job feature is described below with non-limiting examples. However, it should be understood that the extraction of the hypergraph-based job feature is not limited to the following description and may vary depending on changes in the extraction network. **In** the following description, it is assumed that the number of job tasks in each state is N and the number of machines is K.

**In** some embodiments, as shown in Equation 1 below, the job initial feature $C \in \mathbb{R}^{N \times 4}$ corresponding to the state hypergraph may be mapped to the high-dimensional space $Z^{(0)} \in \mathbb{R}^{N \times 100}$ through a fully connected layer.

## Equation 1

$$\mathbf{Z}^{(0)} = \mathbf{C} \times \mathbf{W}_c + \mathbf{b}_c$$

Here, $W_c$ and $b_c$ are trainable parameters. The hypergraph-based job feature ( $Z^{(l)} \in \mathbb{R}^{N \times 100}$ ) may be extracted by inputting the state hypergraph into the hypergraph neural network (e.g., only as an example, hypergraph attention network), where l indicates the number of layers in the hypergraph attention network. The hypergraph attention network may include two parts:

node-level aggregation and edge-level aggregation. The node-level aggregation may be computed separately for each hyperedge and as shown in Equation 2 below, the feature ( $\mathbf{m}_i^{(l)}$ ) of the hyperedge may be obtained by assigning an attention mechanism weight to the nodes
included in the hyperedge.

## Equation 2

$$\mathbf{m}_i^l = \sigma(\textstyle\sum_{v_j \in e_i} \alpha_{ij} \mathbf{W}_n \mathbf{z}_j^{l-1})$$

In Equation 2, $\mathbf{m}_i^{(l)}$ represents the feature of the hyperedge ($e_i$), $\mathbf{z}_j^{(l-1)}$ represents the feature of the network node (j) of $(l-1)^{th}$ layer, $e_i$ represents the $i^{th}$ hyperedge, $v_j$ is $j^{th}$ node, and $\sigma$ is a nonlinear activation function relu. $W_n$ is a trainable matrix and $\alpha_{ij}$ represents the attention coefficient of node (j) at the hyperedge (i). $\alpha_{ij}$ may be calculated as shown in Equation 3.

## Equation 3

$$\alpha_{ij} = \mathrm{softmax}\left(\frac{\mathbf{q}^T \sigma(\mathbf{W}_n \mathbf{z}_j^{l-1})}{\sum_{v_b \in e_i} \mathbf{q}^T \sigma(\mathbf{W}_n \mathbf{z}_b^{l-1})}\right)$$

In Equation 3, q is the parameter vector and $\sigma$ is a nonlinear activation function LeakyRelu. In one example, the job feature of the $j^{th}$ node may be $\mathbf{z}_j^{(l)} \in \mathbb{R}^{1 \times 100}$ .

The edge level aggregation may be computed for each node separately. As shown in Equation 4 below, the feature $\mathbf{z}_j^{(l)}$ of the node may be obtained by aggregating hyperedges including node (j).

## Equation 4

$$\mathbf{z}_j^{(l)} = \sigma(\textstyle\sum_{e_c \in \varepsilon_j} \omega_{jc} \mathbf{W}_e \mathbf{m}_c^{(l)})$$

In Equation 4, $z_j^l$ represents the representation of node ($v_j$), $W_e$ is a trainable matrix, and $\omega_{jc}$ represents an attention coefficient of the hyperedge ($e_c$) to node ($v_j$). $\omega_{jc}$ may be calculated according to Equation 5.

## Equation 5

$$\omega_{jc} = \mathrm{softmax}\left(\frac{\mathbf{d}^T \sigma([\mathbf{W}_d \mathbf{m}_c^l || \mathbf{W}_q \mathbf{z}_j^{l-1}])}{\sum_{e_f \in \varepsilon_j} \mathbf{q}^T \sigma([\mathbf{W}_d \mathbf{m}_f^l || \mathbf{W}_q \mathbf{z}_j^{l-1}])}\right)$$

In Equation 5, d is a parameter vector used to measure the importance of the hyperedges, and $\parallel$ represents splicing.
In step S140, by using the policy network, an action to change the shop scheduling state may be determined according to the hypergraph-based job feature.

According to one or more embodiments, the action to change the shop scheduling state may be determined by extracting the hypergraph-based job feature from the state hypergraph corresponding to the shop scheduling state using the hypergraph neural network and combining the hypergraph-based job feature with the policy network. This may allow an effective flexible job shop scheduling to be implemented even when faced with complex and variable flexible job shop scheduling (or rescheduling).

As a non-limiting example, the policy network may have a double-delay deep deterministic policy gradient algorithm and a proximity policy optimization algorithm based on an Actor-Critic architecture. However, any deep reinforcement learning algorithm may be used.

In some embodiments, hypergraph-based job feature and a sequential order dependency relationship-based job feature corresponding to shop scheduling state may be combined into a combined job feature and the action to change the shop scheduling state may be determined by inputting the combined job feature to the policy network.

For example, the combined job feature ( $\mathbf{Z}^* \in \mathbb{R}^{N \times 100}$ ) may be obtained through a fully connected layer of the policy network by splicing the hypergraph-based job feature and the sequential order dependency relationship-based job feature.

In these embodiments, the hypergraph-based state feature and the sequential order dependency relationship-based job feature may be used together in the policy network, which may improve the accuracy and effectiveness of the flexible job shop scheduling.

The combination job feature may be used interchangeably with the splicing. The sequential order dependency relationship may represent a sequential order dependency relationship between multiple job tasks. For example, a first task may depend on an execution of a second task. However, more complex sequential order dependency relationships may be used. If it is about existing data (i.e., there is no sequential order dependency relationship), the combination steps may be omitted, and the hypergraph-based job feature may be used to determine the action to change the shop scheduling state.

In one example, based on the shop scheduling state, a job relation graph may be established by using a simple graph, wherein the job relation graph may represent a sequential order dependency relationship between the job tasks being processed. Afterwards, the sequential order dependency relationship-based job feature may be extracted from the job relation graph by using a graph neural network (GNN).

Only as examples, the graph neural network may be/include one or more of a graph convolution network (GCN), a graph attention network, a graph autoencoder, a graph generative network, or a graph spatial-temporal network, as non-limiting examples.

The extraction of a sequential order dependency relationship-based job feature is described below with a combination of non-limiting examples. However, it should be understood that the extraction of sequential order dependency relationship-based job feature may vary according to changes in the network.

By inputting an initial job feature into a graph neural network (e.g., simple graph convolution neural network (SGraph Conv)), the sequential order dependency relationship-based job feature $\mathbf{U}^{(l)}$ may be obtained. The convolution formula may be implemented as in Equation 6.

$$\text{Equation 6}$$

$$\mathbf{U}^{(l)} = \widehat{\mathbf{D}}^{-1}\widehat{\mathbf{A}}\mathbf{U}^{l-1}\mathbf{P}^{l}$$

In Equation 6, $\widehat{\mathbf{A}} = A + 1$, A is the adjacency matrix, I is the unit matrix, $\widehat{\mathbf{D}_{pp}} = \sum_{q=1}^{M} A_{pq}$ , $\mathbf{P}^{l}$ is the parameter matrix, and $\mathbf{U}^{(0)}$ is the high-dimensional representation $\mathbf{Z}^{(0)}$ of the initial job feature.

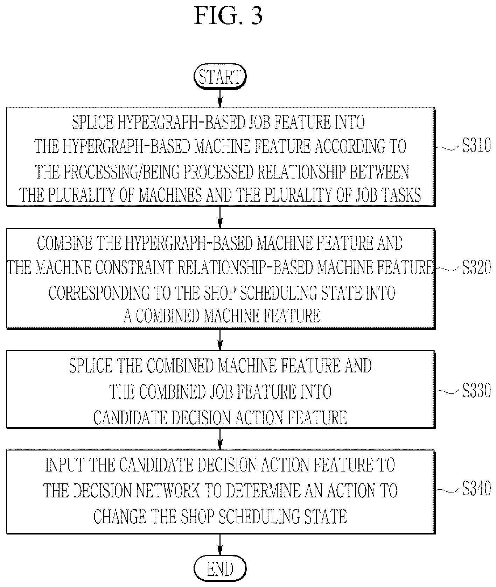

Some example embodiments that may determine actions to change the shop scheduling state by inputting the combined job feature into the policy network are described with reference to FIG. 3.

Furthermore, the policy network may include a k-nearest neighbors graph (KNNG) to reduce the set of candidate actions generated in the step of determining the action to change the shop scheduling state. According to the policy network, the set of candidate actions may be reduced by using the k-nearest neighbors graph, so the amount of computation for determining the action may be reduced and computational efficiency may be improved.

FIG. 2 shows a state hypergraph 200, according to one or more embodiments.

Referring to FIG. 2, Triangles represent job task nodes. For example, job1(1), job1(2), and job1(3) represent the first operation step, the second operation step, and the third operation step of job task 1, respectively. The m oval nodes represent machines. For example, $m_1$, $m_2$, and $m_3$ represent a first machine, second machine, and third machine, respectively.

A node included in a hyperedge (also referred to as a machine hyperedge), where the hyperedge corresponds to (represents) a machine, may represent one or more job tasks that may be matched to the machine in its current state. For example, in ) hypergraph state (a) in FIG. 2, the first machine $m_1$ may be matched to the first operation step of the job task 1, the third operation step of the job task 1, the second operation step of the job task 2, and the third operation step of the job task 2. The second machine $m_2$ may be matched to the third operation step of the job task 2 and the second operation step of the job task 3. The third machine $m_3$ may be matched to the first operation step of the job task 2 and the second operation step of the job task 2.

The hyperedge corresponding to the area enclosed by the bold solid line indicates that the job task has been allocated. For example, after the first operation step (job1(1)) of the job task 1 is allocated to the first machine $m_1$, the state hypergraph is as shown in the (b) operation allocation shown in FIG. 2. Because the corresponding operation step has been allocated, the first operation step (job1(1)) of the job task 1 is removed from the hyperedge of first machine $m_1$ and the first operation step (job1(1)) of the job task 1 is divided to a hyperedge that indicates that the job task has been allocated.

The hyperedge corresponding to the area enclosed by a dotted line indicates a machine down. For example, when the second machine $m_2$ malfunctions and is unusable, as shown in state (c), second machine down in FIG. 2, the second operation step (job3(2)) of the job task 3 (which is matched to the second machine $m_2$) is divided into a hyperedge corresponding to the down machine and operation steps included in the hyperedge corresponding to second machine $m_2$ are deleted. In conventional flexible job shop scheduling, there are two machine statuses, namely, "no machine" and "machine down", so when it is related to conventional data, only the hyperedge corresponding to the down machine of the machine graph and the state hypergraph may need to be deleted.

In some examples, semantic properties of the job task node may include the size, type, processing progress, completion status, etc. of the task. Semantic properties of the machine hyperedge may include queue status, availability, remaining processing time, etc. of the machine, as non-limiting examples.

FIG. 3 shows a method for determining an action to change the shop scheduling state, according to one or more embodiments.

Referring to FIG. 3, In step S310, according to the processing/being processed relationship between the machines and the job tasks, the hypergraph-based job feature may be spliced into the hypergraph-based machine feature.

In other words, according to the matching relationship between a machine and a job task, the set of job tasks that the machine can handle is determined, and the hypergraph-based machine feature may be obtained by splicing a corresponding hypergraph-based job feature in each set of the machines.

In one example, the feature of machine i ( $\widetilde{\mathbf{m}}_j^{(l)} \in \mathbb{R}^{K \times 100}$ ) may be obtained by aggregating the job features included in the hyperedge, as shown in equation 7.

## Equation 7

$$\widetilde{\mathbf{m}}_j^{(l)} = \sum_{v_i \in e_j} \mathbf{z}_j^{(l)}$$

In step S320, the hypergraph-based machine feature and the machine constraint relationship-based machine feature (corresponding to the shop scheduling state) may be combined into a combined machine feature.

For example, by splicing the hypergraph-based machine feature and the machine constraint relationship-based machine feature, the combined machine feature ( $\mathbf{M}^* \in \mathbb{R}^{K \times 100}$ ) may be obtained through a fully connected layer.

The machine constraint relationship may represent a mutual constraint relationship between the machines. For example, one machine may need to run after another machine. Also, for example, one machine may not operate simultaneously with another machine. These are non-limiting examples; other constraint relationships may be represented.

In one example, based on the shop scheduling state, a machine constraint graph may be established by using a simple/non-hyper graph. Such a machine constraint graph may represent a mutual constraint relationship between the machines. Afterwards, the machine constraint relationship-based machine feature may be extracted from the machine constraint graph by using the graph neural network.

The extraction of the machine constraint relationship-based machine feature is described below with a combination of non-limiting examples. However, it should be understood that the extraction of the machine constraint relationship-based machine feature is not limited to the description below and configuration may vary according to changes in the network.

In one example, as shown in equation 8 below, the initial job feature ( $\mathbf{G} \in \mathbb{R}^{N \times 5}$ ) may be mapped to a high-dimensional space ( $\mathbf{I}^{(0)} \in \mathbb{R}^{K \times 100}$ ) through a fully connected layer.

## Equation 8

$$\mathbf{I}^{(0)} = \mathbf{G} \times W_{\mathbf{G}} + \mathbf{b_G}$$

Here, $W_{\mathbf{G}}$ and $\mathbf{b_G}$ are trainable parameters. As shown in equation 9, by inputting the initial features of the machine into a graph neural network (e.g., a simple graph convolution neural network (SGraph Conv)), the machine constraint relationship-based job feature ($\mathbf{I}^{(l)}$) may be obtained. The convolution formula may be as follows.

## Equation 9

$$\mathbf{I}^{(l)} = \widehat{\mathbf{D}}^{-1}\widehat{\mathbf{A}}\mathbf{I}^{\,l-1}\mathbf{T}^l$$

Here, $\hat{\mathbf{A}} = \mathbf{A} + \mathbf{I}$, $\mathbf{A}$ is the adjacency matrix, $\mathbf{I}$ is the unit matrix, $\widehat{\mathbf{D}_{pp}} = \sum_{q=1}^{M} A_{pq}$ , $\mathbf{T}^l$ is the parameter matrix, and $\mathbf{I}^{(0)}$ is the high-dimensional representation of the initial machine feature $\mathbf{I}^{(0)}$.

In step S330, the combined machine feature and the combined job feature may be spliced into a candidate decision action feature.

In other words, according to the matching relationship between the machine and the job task, the candidate decision action feature corresponding to combined state hypergraph information and constraint relationship information may be obtained by splicing hypergraph-based features (e.g., the combined machine feature and the combined job feature) of a pair of (machine, job task (lot)) suitable for matching.

In step S340, an action to change the shop scheduling state may be determined by inputting the candidate decision action feature (derived from splicing) to the decision network.

The method for determining the action to change the shop scheduling state may, depending on implementation, improve the accuracy and effectiveness of flexible job shop scheduling because a combinable machine feature and a combined job feature may be used together in the policy network.

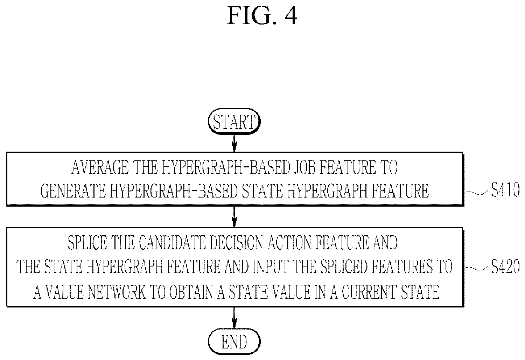

FIG. 4 shows a flowchart of a flexible job shop scheduling method, according to one or more embodiments.

Referring to FIG. 4, in step S410, the hypergraph-based job feature may be averaged to generate a hypergraph-based state hypergraph feature.

The hypergraph-based job feature may be obtained by splicing job features corresponding to all operation steps within a job task.

For example, in one example, the hypergraph-based job feature (Z) is convolved with a $15 \times 1$ convolution kernel. The result of the convolution may be averaged into rows, and finally the hypergraph-based state hypergraph feature ( $Q \in \mathbb{R}^{1 \times 100}$ ) may be obtained through a fully connected layer.

In step S420, the candidate decision action feature and the state hypergraph feature may be spliced and the resulting spliced features may be input to a value network to obtain a state value in a current state.

The value network may be used to evaluate the current state determined by the policy network. In one example, the value network may be a critic network, as a non-limiting example.

The current state determined by the policy network may be evaluated by inputting the features obtained from splicing of the candidate decision action feature and the state hypergraph feature into the value network, so the current state determined by the policy network may be pertinently assessed, which may encourage the policy network to make better decisions.

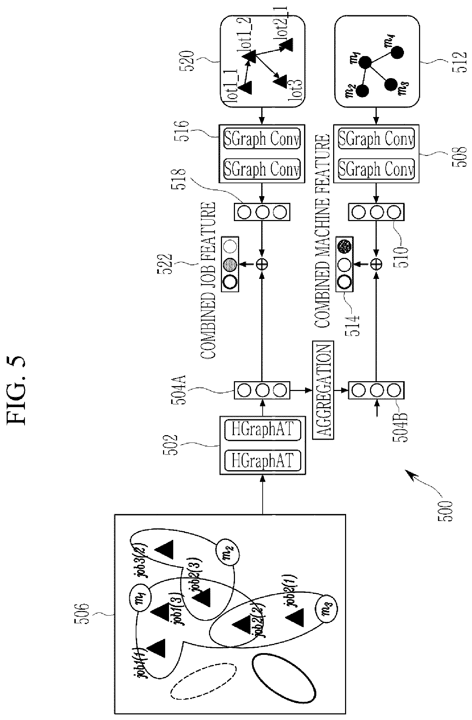

FIG. 5 shows a feature extraction network 500, according to one or more embodiments.

Referring to FIG. 5, a hypergraph neural network (HGraphAT) 502 may be used to extract hypergraph-based job feature 504A from the state hypergraph 506. For example, the state hypergraph 506 may be a state hypergraph described with reference to FIG. 2 (e.g., state hypergraph 200). In one example, an aggregated hypergraph-based machine feature 504B may be obtained by aggregating the hypergraph-based job features 504A.

In Fig. 5, the first graph neural network (SGraph Conv) 508 may extract the machine constraint relationship-based machine feature 510 from the machine constraint graph 512. As described above, the machine constraint graph 512 may represent mutual constraint relationships between the machines. For example, the first machine $m_1$, the second machine $m_2$, the third machine $m_3$, and the fourth machine $m_4$ may have a constraint relationship as shown in FIG. 5.

The extracted machine constraint relationship-based machine feature 510 may be combined with the hypergraph-based machine feature 504A to obtain the combined machine feature 514. For example, the combined machine feature 514 may be represented as vectors through embedding.

In Fig. 5, the second graph neural network (SGraph Conv) 516 may extract the sequential order dependency relationship-based job feature 518 from the job relation graph 520. As described above, a sequential order dependency relationship may represent the sequential order dependency relationship between job tasks being processed. For example, the operation step (lot 1_1), the operation step (lot 1_2), the operation step (lot 1_3), and the operation step (lot 2_1) may have the sequential order dependency relationship as shown in FIG. 5.

The extracted sequential order dependency relationship-based job feature 518 may be combined with the hypergraph-based job feature 504 to obtain the combined job feature 522. For example, the combined job feature 522 may be represented as vectors through embedding.

To summarize, the combined machine feature 514 and the combined job feature 522 may be obtained through the feature extraction network 500, according to one or more embodiments.

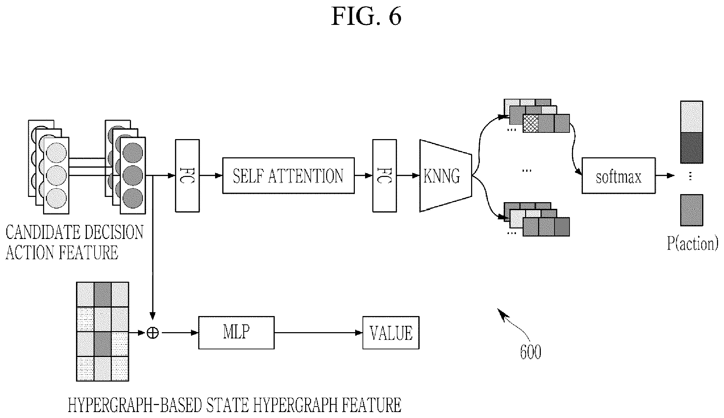

FIG. 6 shows a decision network 600, according to one or more embodiments.

The decision network 600 may be implemented using any deep reinforcement learning algorithm. For example, the decision network 600 may be established by using a Twin Delayed Deep Deterministic (TD3) policy gradient algorithm. As another example, the decision network 600 may be implemented by using a Proximal Policy Optimization (PPO) algorithm based on an Actor-Critic (AC) architecture. By way of example, FIG. 6 represents the decision network 600 as a decision network based on an Actor-Critic architecture. However, this a non-limiting example; another type of decision network may be used.

The operation of the decision network 600 is described next by combining non-limiting examples.

In FIG. 6, the decision network 600 may execute the following steps:

Step 1: The combined machine feature and the combined job feature may be spliced into the candidate decision action feature. The candidate decision action feature 602 may include abstract representations of jobs and machines obtained through hypergraph networks and general graph networks.

Step 2: Node features may be extracted through the candidate action set. Each candidate action in the candidate action set may be represented as a job task node included in one machine hyperedge of the state graph and node abstract representations on both ends of the edge may be represented as features of the action. A set of candidate actions may be determined based on the state graph.

Step 3: Send the abstract representations of all candidate actions to an actor network. First, action representations are mapped to a low-dimensional space through an FC (Fully Connected) layer. According to a self-attention mechanism, the attention coefficient between actions is obtained and the action features are updated. Candidate action features may be obtained by multiplying the obtained result by trainable vectors where priority weights of the actions are the trainable vectors.

Step 4: Since the action set may be very large, it may be helpful to reduce the candidate action set (e.g., number of candidate action feature). The action set may be reduced by using a k-nearest neighbors graph (k-NNG). For example, by calculating a distance between each action feature and the other action features, the top k most similar actions may be taken. In this way, N action sets may be obtained. According to the priority weight obtained in the third step, the set whose weight is greater than a threshold may be selected, merged, and de-duplicated to obtain a reduced set of candidate actions. Action scores may be obtained by performing Softmax on the action set.

Step 5: By splicing the abstract representation of the graph (i.e., hypergraph-based state hypergraph feature) and the abstract representation of the candidate actions (i.e., candidate decision action feature) and sending the spliced representations to the critic network, the state value of the current state may be estimated.

If the decision network is a decision network based on the Actor-Critic architecture, the policy network may be the actor network and the value network may be the critic network.

Furthermore, a network according to an example embodiment of the present disclosure may be trained end-to-end through a training method of the Proximal Policy Optimization (PPO) algorithm. For example, the state value output by the critic network represents a discounted total profit of future starting from current time t and a loss of the value function may be obtained by using a time difference algorithm. Action updates of the actor network are to calculate the loss of the policy network through an objective function of the PPO (Proximal Policy Optimization) algorithm and the entire network may be jointly trained by adding an entropy of an action probability distribution as a normalized term.

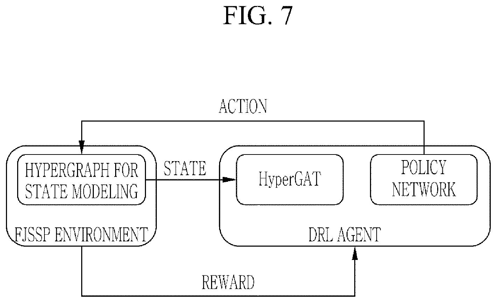

FIG. 7 shows a flexible job shop scheduling method, according to one or more embodiments.

Referring to FIG. 7, the entire flow of the flexible job shop scheduling method may include the following steps. Step 1: FJSSP environment initialization, display an initial state graph through a hypergraph. Step 2: Deep reinforcement learning (DRL) agent acquires an environment state graph. The agent may utilize a hypergraph attention network (HyperGAT) to extract an abstract representation of the environment state from the state graph. Step 3: Construct an operation relationship graph and extract a feature of the operation by using a graph convolution network (Graph Conv).

Step 4: Construct a machine constraint graph and extract a machine feature by using a graph convolution network (Graph Conv). Step 5: Design k-NNG to reduce the action space. Step 6: Configure the policy network and decide actions to be executed. Step 7: The state of the FJSSP environment varies after the action is executed, transmits the updated state graph to the agent, and simultaneously transfers the reward generated after the action is executed to the agent to adjust parameters of the agent network during the training. Step 8: Repeat the step 2 to 7.

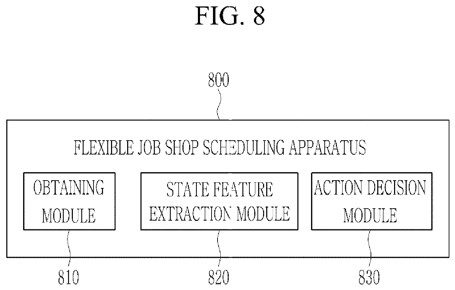

FIG. 8 shows a flexible job shop scheduling apparatus, according to one or more embodiments.

Referring to FIG. 8, a flexible job shop scheduling apparatus 800 may include an obtaining module 810, a state feature extraction module 820, and an action decision module 830.

The obtaining module 810 may obtain a shop scheduling state, and the shop scheduling state may include at least one of the sequential order dependency relationship between the job tasks being processed, the sequential order dependency relationship between the operation steps in each job task of the job tasks, a processing/being processed relationship between the job tasks and machines, and a mutual constraint relationship between the machines.

The state feature extraction module 820 may represent the shop scheduling state as a state hypergraph by using a hypergraph and may extract a hypergraph-based job feature from the state hypergraph by using a hypergraph neural network.

The action decision module 830 may use a policy network to determine an action to change the shop scheduling state based on the status feature according to the hypergraph-based job feature.

The obtaining operation executed by the obtaining module 810, the feature extraction operation executed by the state feature extraction module 820, and the action decision operation executed by the action decision module 830 have been described above in conjunction with one or more FIGS. 1 to 7.

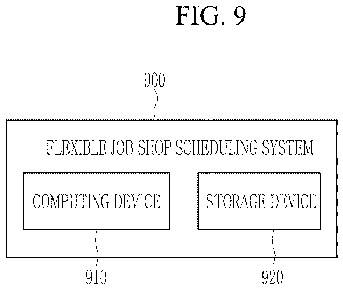

FIG. 9 shows a flexible job shop scheduling system according to one or more embodiment.

Referring to FIG. 9, a flexible job shop scheduling system 900 may include one or more computing devices 910 (e.g., processors) and one or more storage devices 920. The one or more storage devices 920 may store a computer program. When the computer program is executed by one or more computing device 910, any method described with reference to FIGS. 1-8 is implemented. Any of the methods described with reference to FIGS. 1-8 may be executed by the one or more computing devices 910.

Furthermore, the methods according to exemplary embodiments of the present disclosure may be implemented as a computer program in a computer-readable storage medium. A person of an ordinary skill in the art may implement the computer program according to the disclosure of the methods. When the computer program is executed on the computer, the flexible job shop scheduling method of the present disclosure is implemented.

According to an embodiment of the present disclosure, the computer-readable storage medium may be provided, the computer program may be stored in the computer-readable storage medium, and when the computer program is executed by the processor, the computer program enables the processor to Implement any of the methods disclosed in this application. For example, when the computer program is executed by the processor, the computer program enables the processor to execute: obtaining a shop scheduling state including at least one of a sequential order dependency relationship between a plurality of job tasks being processed, a sequential order dependency relationship between a plurality of operation steps in each job task of the job tasks, a processing/being processed relationship between of job tasks and a plurality of machines, and a mutual constraint relationship between of machines; representing the shop scheduling state as a state hypergraph by using a hypergraph; extracting a hypergraph-based job feature from the state hypergraph by using a hypergraph neural network; and determining an action to change the shop scheduling state according to the hypergraph-based job feature by using a policy network.

The computing apparatuses, the electronic devices, the processors, the memories, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the appended claims.

## EP 4 475 052 B1

**Claims**

1.  A Flexible Job Shop scheduling method, comprising:

    obtaining a shop scheduling state including at least one of a sequential order dependency relationship between a plurality of job tasks being processed, a sequential order dependency relationship between a plurality of operation steps in each job task of the plurality of job tasks, a processing/being processed relationship between the plurality of job tasks and a plurality of machines, and a mutual constraint relationship between the plurality of machines; representing the shop scheduling state as a state hypergraph by using a hypergraph; extracting a hypergraph-based job feature from the state hypergraph using a hypergraph neural network; and determining an action to change the shop scheduling state according to the hypergraph-based job feature using a policy network.

2.  The method of claim 1, wherein the determining an action to change the shop scheduling state according to the hypergraph-based job feature comprises:

    combining the hypergraph-based job feature and a sequential order dependency relationship-based job feature corresponding to the shop scheduling state into a combined job feature; and determining the action to change the shop scheduling state by inputting the combined job feature to the policy network.

3.  The method of claim 2, wherein the determining the action to change the shop scheduling state by inputting the combined job feature into the policy network comprises:

    splicing the hypergraph-based job feature into a hypergraph-based machine feature according to the processing/being processed relationship between the plurality of job tasks and the plurality of machines; combining the hypergraph-based machine feature and a machine feature based on a machine constraint relationship corresponding to the shop scheduling state into a combined machine feature; splicing the combined machine feature and the combined job feature into a candidate decision action feature; and determining the action to change the shop scheduling state by inputting the candidate decision action feature into a decision network.

4.  The method of claim 3, further comprising:

    generating a state hypergraph feature based on the hypergraph by averaging the hypergraph-based job feature; and splicing the candidate decision action feature and the state hypergraph feature and inputting spliced feature into a value network to obtain a state value of a current state.

5.  The method of claim 3 or 4, wherein the machine feature based on the machine constraint relationship is extracted based on steps including:

    establishing a machine constraint graph by using a simple graph based on the shop scheduling state, wherein the machine constraint graph represents a mutual constraint relationship between the plurality of machines; and extracting the machine feature based on the machine constraint relationship from the machine constraint graph using a first graph neural network.

6.  The method of any one of the claims 2-5, wherein the job feature based on the sequential order dependency relationship is extracted based on steps including:

    establishing a job relation graph by using a simple graph based on the shop scheduling state, wherein the job relation graph represents the sequential order dependency relationship between the plurality of job tasks being processed; and extracting the job feature based on the sequential order dependency relationship from the job relation graph by using a second graph neural network.

7. The method of any one of the previous claims, wherein
   the policy network includes a k-nearest neighbors graph to reduce a set of candidate actions generated in the step of determining the action to change the shop scheduling state.

8. The method of any one of the previous claims, wherein
   the policy network includes a policy network that is one of a double-delay deep deterministic policy gradient algorithm and a proximity policy optimization algorithm based on an Actor-Critic architecture.

9. A flexible job shop scheduling apparatus, comprising:

   an obtaining module configured to obtain a shop scheduling state including at least one of a sequential order dependency relationship between a plurality of job tasks being processed, a dependent relationship between a plurality of operation steps in each job task of the plurality of job tasks, a processing/being processed relationship between the plurality of job tasks and a plurality of machines, and a mutual constraint relationship between the plurality of machines;
   a state feature extraction module configured to represent the shop scheduling state as a state hypergraph by using a hypergraph and extract a hypergraph-based job feature from the state hypergraph using a hypergraph neural network; and
   an action decision module configured to determine an action to change the shop scheduling state based on a state feature according to the hypergraph-based job feature using a policy network.

10. The flexible job shop scheduling apparatus of claim 9, wherein the action decision module is configured to:

    combine the hypergraph-based job feature and a sequential order dependency relationship-based job feature corresponding to the shop scheduling state into a combined job feature; and
    determine the action to change the shop scheduling state by inputting the combined job feature to the policy network.

11. The flexible job shop scheduling apparatus of claim 10, wherein the action decision module is configured to:

    splice the hypergraph-based job feature into a hypergraph-based machine feature according to the processing/-being processed relationship between the plurality of job tasks and the plurality of machines;
    combine the hypergraph-based machine feature and a machine feature based on a machine constraint relationship corresponding to the shop scheduling state into a combined machine feature;
    splice the combined machine feature and the combined job feature into a candidate decision action feature; and
    determine the action to change the shop scheduling state by inputting the candidate decision action feature into a decision network.

12. The flexible job shop scheduling apparatus according to claim 11, further comprising a state hypergraph feature generation module configured to:

    generate a state hypergraph feature based on the hypergraph by averaging the hypergraph-based job feature; and
    splice the candidate decision action feature and the state hypergraph feature and inputting spliced feature into a value network to obtain a state value of a current state.

13. The flexible job shop scheduling apparatus according to claim 11 or 12, wherein the state feature extraction module is configured to:

    establish a machine constraint graph by using a simple graph based on the shop scheduling state, wherein the machine constraint graph represents a mutual constraint relationship between the plurality of machines; and
    extract the machine feature based on the machine constraint relationship from the machine constraint graph using a first graph neural network.

14. The flexible job shop scheduling apparatus according to any one of the claims 10-13, wherein the state feature extraction module is configured to:

    establish a job relation graph by using a simple graph based on the shop scheduling state, wherein the job relation

14

graph represents the sequential order dependency relationship between the plurality of job tasks being processed; and

extract the job feature based on the sequential order dependency relationship from the job relation graph by using a second graph neural network.

**15.** A flexible job shop scheduling system, comprising:

one or more computing devices and

one or more storage devices configured to be recorded with a computer program,

wherein the computer program comprises instructions that cause the one or more computing devices to implement a flexible job shop scheduling method according to any one of claims 1-8.

## Patentansprüche

**1.** Verfahren zur flexiblen Auftragsfertigungsplanung, das Folgendes umfasst:

Erhalten eines Fertigungsplanungszustands, der eine sequenzielle Reihenfolgeabhängigkeitsbeziehung zwischen einer Vielzahl von in Bearbeitung befindlichen Auftragsaufgaben, eine sequenzielle Reihenfolgeabhängigkeitsbeziehung zwischen einer Vielzahl von Arbeitsschritten in jeder Auftragsaufgabe der Vielzahl von Auftragsaufgaben, eine in-Bearbeitung-befindlich-/Bearbeitet-Beziehung zwischen der Vielzahl von Auftragsaufgaben und einer Vielzahl von Maschinen, und/oder eine gegenseitige Beschränkungsbeziehung zwischen der Vielzahl von Maschinen einschließt;

Darstellen des Fertigungsplanungszustands als Zustandshypergraph unter Verwendung eines Hypergraphen;

Extrahieren eines hypergraphbasierten Auftragsmerkmals aus dem Zustandshypergraphen unter Verwendung eines hypergraphischen neuronalen Netzes; und

Bestimmen einer Aktion zum Ändern des Fertigungsplanungszustands gemäß dem hypergraphbasierten Auftragsmerkmal unter Verwendung eines Richtliniennetzes.

**2.** Verfahren nach Anspruch 1, wobei

das Bestimmen einer Aktion zum Ändern des Fertigungsplanungszustands gemäß dem hypergraphbasierten Auftragsmerkmal Folgendes umfasst:

Kombinieren des hypergraphbasierten Auftragsmerkmals und eines auf einer sequenziellen Reihenfolgeabhängigkeitsbeziehung basierenden Auftragsmerkmals, das dem Fertigungsplanungszustand entspricht, zu einem kombinierten Auftragsmerkmal; und

Bestimmen der Aktion zum Ändern des Fertigungsplanungszustands durch Eingeben des kombinierten Auftragsmerkmals in das Richtliniennetzwerk.

**3.** Verfahren nach Anspruch 2, wobei

das Bestimmen der Aktion zum Ändern des Fertigungsplanungszustands durch Eingeben des kombinierten Auftragsmerkmals in das Richtliniennetzwerk Folgendes umfasst:

Spleißen des hypergraphbasierten Auftragsmerkmals in ein hypergraphbasiertes Maschinenmerkmal gemäß der in-Bearbeitung-befindlich-/Bearbeitet-Beziehung zwischen der Vielzahl von Auftragsaufgaben und der Vielzahl von Maschinen;

Kombinieren des hypergraphbasierten Maschinenmerkmals und eines auf einer Maschinenbeschränkungsbeziehung basierenden Maschinenmerkmals, das dem Fertigungsplanungszustand entspricht, zu einem kombinierten Maschinenmerkmal;

Spleißen des kombinierten Maschinenmerkmals und des kombinierten Auftragsmerkmals zu einem Kandidatenentscheidungsaktionsmerkmal; und

Bestimmen der Aktion zum Ändern des Fertigungsplanungszustands durch Eingeben des Kandidatenentscheidungsaktionsmerkmals in ein Entscheidungsnetz.

**4.** Verfahren nach Anspruch 3, das ferner Folgendes umfasst:

Erzeugen eines Zustandshypergraphmerkmals basierend auf dem Hypergraphen durch Mitteln des hypergraphbasierten Auftragsmerkmals; und

Spleißen des Kandidatenentscheidungsaktionsmerkmals und des Zustandshypergraphmerkmals sowie Eingeben des gespleißten Merkmals in ein Wertnetzwerk, um einen Zustandswert eines aktuellen Zustands zu erhalten.

5. Verfahren nach Anspruch 3 oder 4, wobei das auf der Maschinenbeschränkungsbeziehung basierende Maschinenmerkmal basierend auf Schritten extrahiert wird, die Folgendes einschließen:

Erstellen eines Maschinenbeschränkungsgraphen unter Verwendung eines einfachen Graphen basierend auf dem Fertigungsplanungszustand, wobei der Maschinenbeschränkungsgraph eine gegenseitige Beschränkungsbeziehung zwischen der Vielzahl von Maschinen darstellt; und
Extrahieren des Maschinenmerkmals basierend auf der Maschinenbeschränkungsbeziehung aus dem Maschinenbeschränkungsgraphen unter Verwendung eines ersten graphenneuronalen Netzes.

6. Verfahren nach einem der Ansprüche 2 bis 5, wobei
das auf der sequenziellen Reihenfolgeabhängigkeitsbeziehung basierende Auftragsmerkmal basierend auf Schritten extrahiert wird, die Folgendes einschließen:

Erstellen eines Auftragsbeziehungsgraphen unter Verwendung eines einfachen Graphen basierend auf dem Fertigungsplanungszustand, wobei der Auftragsbeziehungsgraph die sequenzielle Reihenfolgeabhängigkeitsbeziehung zwischen der Vielzahl von in Bearbeitung befindlichen Auftragsaufgaben darstellt; und
Extrahieren des Auftragsmerkmals basierend auf der sequenziellen Reihenfolgeabhängigkeitsbeziehung aus dem Auftragsbeziehungsgraphen unter Verwendung eines zweiten graphenneuronalen Netzes.

7. Verfahren nach einem der vorhergehenden Ansprüche, wobei
das Richtliniennetzwerk einen Graphen der k nächsten Nachbarn einschließt, um einen Satz von Kandidatenaktionen zu verringern, die in dem Schritt zum Bestimmen der Aktion zum Ändern des Fertigungsplanungszustands erzeugt wurden.

8. Verfahren nach einem der vorhergehenden Ansprüche, wobei
das Richtliniennetzwerk ein Richtliniennetzwerk einschließt, das entweder ein doppelverzögerter tiefer deterministischer Richtlinien-Gradientenalgorithmus oder ein auf einer Actor-Critic-Architektur basierender proximaler Richtlinienoptimierungsalgorithmus ist.

9. Vorrichtung zur flexiblen Auftragsfertigungsplanung, die Folgendes umfasst:

ein Erhaltungsmodul, das konfiguriert ist zum Erhalten eines Fertigungsplanungszustands, der eine sequenzielle Reihenfolgeabhängigkeitsbeziehung zwischen einer Vielzahl von in Bearbeitung befindlichen Auftragsaufgaben, eine Abhängigkeitsbeziehung zwischen einer Vielzahl von Arbeitsschritten in jeder Auftragsaufgabe der Vielzahl von Auftragsaufgaben,
eine in-Bearbeitung-befindlich-/Bearbeitet-Beziehung zwischen der Vielzahl von Auftragsaufgaben und einer Vielzahl von Maschinen, und/oder eine gegenseitige Beschränkungsbeziehung zwischen der Vielzahl von Maschinen einschließt;
ein Zustandsmerkmalextraktionsmodul, das konfiguriert ist zum Darstellen des Fertigungsplanungszustands als Zustandshypergraph unter Verwendung eines Hypergraphen und zum Extrahieren eines hypergraphbasierten Auftragsmerkmals aus dem Zustandshypergraphen unter Verwendung eines hypergraphbasierten neuronalen Netzes; und
ein Aktionsentscheidungsmodul, das konfiguriert ist zum Bestimmen einer Aktion zum Ändern des Fertigungsplanungszustands basierend auf einem Zustandsmerkmal nach dem hypergraphbasierten Auftragsmerkmal unter Verwendung eines Richtliniennetzwerks.

10. Vorrichtung zur flexiblen Auftragsfertigungsplanung nach Anspruch 9, wobei das Aktionsentscheidungsmodul zu Folgendem konfiguriert ist:

Kombinieren des hypergraphbasierten Auftragsmerkmals und eines auf einer sequenziellen Reihenfolgeabhängigkeitsbeziehung basierenden Auftragsmerkmals, das dem Fertigungsplanungszustand entspricht, zu einem kombinierten Auftragsmerkmal; und
Bestimmen der Aktion zum Ändern des Fertigungsplanungszustands durch Eingeben des kombinierten Auftragsmerkmals in das Richtliniennetzwerk.

**11.** Vorrichtung zur flexiblen Auftragsfertigungsplanung nach Anspruch 10, wobei das Aktionsentscheidungsmodul zu Folgendem konfiguriert ist:

Spleißen des hypergraphbasierten Auftragsmerkmals in ein hypergraphbasiertes Maschinenmerkmal gemäß der in-Bearbeitung-befindlich-/Bearbeitet-Beziehung zwischen der Vielzahl von Auftragsaufgaben und der Vielzahl von Maschinen;

Kombinieren des hypergraphbasierten Maschinenmerkmals und eines auf einer Maschinenbeschränkungsbeziehung basierenden Maschinenmerkmals, die dem Fertigungsplanungszustand entspricht, zu einem kombinierten Maschinenmerkmal;

Spleißen des kombinierten Maschinenmerkmals und des kombinierten Auftragsmerkmals zu einem Kandidatenentscheidungsaktionsmerkmal; und

Bestimmen der Aktion zum Ändern des Fertigungsplanungszustands durch Eingeben des Kandidatenentscheidungsaktionsmerkmals in ein Entscheidungsnetz.

**12.** Vorrichtung zur flexiblen Auftragsfertigungsplanung nach Anspruch 11, die ferner ein Modul zur Erzeugung von Zustandshypergraphmerkmalen umfasst, das zu Folgendem konfiguriert ist:

Erzeugen eines Zustandshypergraphmerkmals basierend auf dem Hypergraphen durch Mitteln des hypergraphbasierten Auftragsmerkmals; und

Spleißen des Kandidatenentscheidungsaktionsmerkmals und des Zustandshypergraphmerkmals sowie Eingeben des gespleißten Merkmals in ein Wertnetzwerk, um einen Zustandswert eines aktuellen Zustands zu erhalten.

**13.** Vorrichtung zur flexiblen Auftragsfertigungsplanung nach Anspruch 11 oder 12, wobei das Zustandsmerkmalsextraktionsmodul zu Folgendem konfiguriert ist:

Erstellen eines Maschinenbeschränkungsgraphen unter Verwendung eines einfachen Graphen basierend auf dem Fertigungsplanungszustand, wobei der Maschinenbeschränkungsgraph eine gegenseitige Beschränkungsbeziehung zwischen der Vielzahl von Maschinen darstellt; und

Extrahieren des Maschinenmerkmals basierend auf der Maschinenbeschränkungsbeziehung aus dem Maschinenbeschränkungsgraphen unter Verwendung eines ersten hypergraphischen neuronalen Netzes.

**14.** Vorrichtung zur flexiblen Auftragsfertigungsplanung nach einem der Ansprüche 10 bis 13, wobei das Zustandsmerkmalsextraktionsmodul zu Folgendem konfiguriert ist:

Erstellen eines Auftragsbeziehungsgraphen unter Verwendung eines einfachen Graphen basierend auf dem Fertigungsplanungszustand, wobei der Auftragsbeziehungsgraph die sequenzielle Reihenfolgeabhängigkeitsbeziehung zwischen der Vielzahl von in Bearbeitung befindlichen Auftragsaufgaben darstellt; und

Extrahieren des Auftragsmerkmals basierend auf der sequenziellen Reihenfolgeabhängigkeitsbeziehung aus dem Auftragsbeziehungsgraphen unter Verwendung eines zweiten hypergraphischen neuronalen Netzes.

**15.** System zur flexiblen Auftragsfertigungsplanung, das Folgendes umfasst:

eine oder mehrere Computervorrichtungen und

ein oder mehrere Speichervorrichtungen, die so konfiguriert sind, dass auf ihnen ein Computerprogramm aufgezeichnet werden kann,

wobei das Computerprogramm Anweisungen umfasst, die bewirken, dass das eine oder die mehreren Computervorrichtungen ein Verfahren zur flexiblen Auftragsfertigungsplanung nach einem der Ansprüche 1 bis 8 implementieren.

**Revendications**

**1.** Méthode d'ordonnancement d'ateliers de type job-shop flexible, comprenant :

l'obtention d'un état d'ordonnancement d'ateliers comprenant au moins un type de relation parmi :

une relation de dépendance d'ordre séquentiel entre une pluralité de tâches de travail en cours de traitement, une relation de dépendance d'ordre séquentiel entre une pluralité d'étapes d'opération au sein de chaque tâche de la pluralité de tâches de travail, une relation traitement/en cours de traitement entre la pluralité de tâches de travail et une pluralité de machines, et une relation de contraintes mutuelles entre la pluralité de machines ;

la représentation de l'état d'ordonnancement d'ateliers sous la forme d'un hypergraphe d'état au moyen d'un hypergraphe ;

l'extraction d'une caractéristique de travail fonction de l'hypergraphe à partir de l'hypergraphe d'état à l'aide d'un réseau neuronal d'hypergraphe ; et

la détermination d'une action visant à modifier l'état d'ordonnancement d'ateliers conformément à la caractéristique de travail fonction de l'hypergraphe à l'aide d'un réseau de politique.

2. Méthode selon la revendication 1, dans laquelle

la détermination d'une action visant à modifier l'état d'ordonnancement d'ateliers conformément à la caractéristique de travail fonction de l'hypergraphe comprend :

la combinaison de la caractéristique de travail fonction de l'hypergraphe et d'une caractéristique de travail fonction d'une relation de dépendance d'ordre séquentiel et correspondant à l'état d'ordonnancement d'ateliers en une caractéristique de travail combinée ; et

la détermination de l'action visant à modifier l'état d'ordonnancement d'ateliers par introduction de la caractéristique de travail combinée dans le réseau de politique.

3. Méthode selon la revendication 2, dans laquelle

la détermination de l'action visant à modifier l'état d'ordonnancement d'ateliers par introduction de la caractéristique de travail combinée dans le réseau de politique comprend :

la fusion de la caractéristique de travail fonction de l'hypergraphe dans une caractéristique machines fonction de l'hypergraphe conformément à la relation traitement/en cours de traitement entre la pluralité de tâches de travail et la pluralité de machines ;

la combinaison de la caractéristique machines fonction de l'hypergraphe et d'une caractéristique machines fonction d'une relation de contraintes machines et correspondant à l'état d'ordonnancement d'ateliers en une caractéristique machines combinée ;

la fusion de la caractéristique machines combinée et la caractéristique de travail combinée en une caractéristique d'action de décision candidate ; et

la détermination de l'action visant à modifier l'état d'ordonnancement d'ateliers par introduction de la caractéristique d'action de décision candidate dans un réseau de décision.

4. Méthode selon la revendication 3, comprenant en outre :

la génération d'une caractéristique d'hypergraphe d'état compte tenu de l'hypergraphe par moyennation de la caractéristique de travail fonction de l'hypergraphe ; et

la fusion de la caractéristique d'action de décision candidate et de la caractéristique d'hypergraphe d'état et l'introduction de la caractéristique fusionnée dans un réseau de valeurs pour obtenir une valeur d'état de l'état actuel.

5. Méthode selon la revendication 3 ou 4, dans laquelle la caractéristique machines fonction de la relation de contraintes machines est extraite compte tenu d'étapes comprenant :

l'établissement d'un graphe de contraintes machines au moyen d'un graphe simple fonction de **l'état** d'ordonnancement d'ateliers, ledit graphe de contraintes machines représentant une relation de contraintes mutuelles entre la pluralité de machines ; et

l'extraction de la caractéristique machines compte tenu de la relation de contraintes machines à partir du graphe de contraintes machines à l'aide d'un premier réseau neuronal de graphe.

6. Méthode selon l'une quelconque des revendications 2 à 5, dans laquelle

la caractéristique de travail fonction de la relation de dépendance d'ordre séquentiel est extraite compte tenu d'étapes comprenant :

l'établissement d'un graphe de relations de travail au moyen d'un graphe simple, compte tenu de l'état d'ordonnancement d'ateliers, ledit graphe de relations de travail représentant la relation de dépendance d'ordre séquentiel entre la pluralité de tâches de travail en cours de traitement ; et

l'extraction de la caractéristique de travail compte tenu de la relation de dépendance d'ordre séquentiel à partir du graphe de relations de travail au moyen d'un deuxième réseau neuronal de graphe.

7. Méthode selon l'une quelconque des revendications précédentes, dans laquelle
le réseau de politique comprend un graphe des k plus proches voisins pour réduire un ensemble d'actions candidates générées lors de l'étape de détermination de l'action visant à modifier l'état d'ordonnancement d'ateliers.

8. Méthode selon l'une quelconque des revendications précédentes, dans laquelle
le réseau de politique comprend un réseau de politique qui est soit un algorithme de gradient de politique déterministe profond à double retard, soit un algorithme d'optimisation proximale de politique fondé sur une architecture acteur-critique.

9. Dispositif d'ordonnancement d'ateliers de type job-shop flexible, comprenant :

un module d'obtention conçu pour obtenir un état d'ordonnancement d'ateliers comprenant au moins un type de relation parmi : une relation de dépendance d'ordre séquentiel entre une pluralité de tâches de travail en cours de traitement, une relation dépendante entre une pluralité d'étapes d'opération au sein de chaque tâche de la pluralité de tâches de travail, une relation traitement/en cours de traitement entre la pluralité de tâches de travail et une pluralité de machines, et une relation de contraintes mutuelles entre la pluralité de machines ;
un module d'extraction de caractéristiques d'état conçu pour représenter l'état d'ordonnancement d'ateliers sous la forme d'un hypergraphe d'état au moyen d'un hypergraphe et pour extraire une caractéristique de travail fonction de l'hypergraphe à partir de l'hypergraphe d'état à l'aide d'un réseau neuronal d'hypergraphe ; et
un module de décision d'action conçu pour déterminer une action visant à modifier l'état d'ordonnancement d'ateliers, compte tenu d'une caractéristique d'état conformément à la caractéristique de travail fonction de l'hypergraphe à l'aide d'un réseau de politique.

10. Dispositif d'ordonnancement d'ateliers de type job-shop flexible selon la revendication 9, dans lequel le module de décision d'action est conçu pour :

combiner la caractéristique de travail fonction de l'hypergraphe et une caractéristique de travail fonction d'une relation de dépendance d'ordre séquentiel et correspondant à l'état d'ordonnancement d'ateliers en une caractéristique de travail combinée ; et
déterminer l'action visant à modifier l'état d'ordonnancement d'ateliers par introduction de la caractéristique de travail combinée dans le réseau de politique.

11. Dispositif d'ordonnancement d'ateliers de type job-shop flexible selon la revendication 10, dans lequel le module de décision d'action est conçu pour :

fusionner la caractéristique de travail fonction de l'hypergraphe dans une caractéristique machines fonction de l'hypergraphe conformément à la relation traitement/en cours de traitement entre la pluralité de tâches de travail et la pluralité de machines ;
combiner la caractéristique machines fonction de l'hypergraphe et une caractéristique machines fonction d'une relation de contraintes machines et correspondant à l'état d'ordonnancement d'ateliers en une caractéristique machines combinée ;
fusionner la caractéristique machines combinée et la caractéristique de travail combinée en une caractéristique d'action de décision candidate ; et
déterminer l'action visant à modifier l'état d'ordonnancement d'ateliers par introduction de la caractéristique d'action de décision candidate dans un réseau de décision.

12. Dispositif d'ordonnancement d'ateliers de type job-shop flexible selon la revendication 11, comprenant en outre un module de génération de caractéristique d'hypergraphe d'état conçu pour :

générer une caractéristique d'hypergraphe d'état compte tenu de l'hypergraphe par moyennation de la caractéristique de travail fonction de l'hypergraphe ; et
fusionner la caractéristique d'action de décision candidate et la caractéristique d'hypergraphe d'état et introduire la caractéristique fusionnée dans un réseau de valeurs pour obtenir une valeur d'état d'un état actuel.

13. Dispositif d'ordonnancement d'ateliers de type job-shop flexible selon la revendication 11 ou 12, dans lequel le module d'extraction de caractéristiques d'état est conçu pour :

> établir un graphe de contraintes machines au moyen d'un graphe simple, compte tenu de l'état d'ordonnancement d'ateliers, ledit graphe de contraintes machines représentant une relation de contraintes mutuelles entre la pluralité de machines ; et
> extraire la caractéristique machines compte tenu de la relation de contraintes machines à partir du graphe de contraintes machines à l'aide d'un premier réseau neuronal de graphe.

**14.** Dispositif d'ordonnancement d'ateliers de type job-shop flexible selon l'une quelconque des revendications 10 à 13, dans lequel le module d'extraction de caractéristiques d'état est conçu pour :

> établir un graphe de relations de travail au moyen d'un graphe simple compte tenu de l'état d'ordonnancement d'ateliers, ledit graphe de relations de travail représentant la relation de dépendance d'ordre séquentiel entre la pluralité de tâches de travail en cours de traitement ; et
> extraire la caractéristique de travail compte tenu de la relation de dépendance d'ordre séquentiel à partir du graphe de relations de travail au moyen d'un deuxième réseau neuronal de graphe.

**15.** Système d'ordonnancement d'ateliers de type job-shop flexible, comprenant :

> un ou plusieurs dispositifs informatiques, et
> un ou plusieurs dispositifs de stockage conçus pour contenir l'enregistrement d'un programme informatique, ledit programme informatique comprenant des instructions qui amènent le ou les dispositifs informatiques à mettre en œuvre une méthode d'ordonnancement d'ateliers de type job-shop flexible selon l'une quelconque des revendications 1 à 8.

FIG. 1

```
                    ( START )
                        │
                        ▼
┌─────────────────────────────────────────────┐
│          OBTAIN SHOP SCHEDULING STATE        │─ S110
└─────────────────────────────────────────────┘
                        │
                        ▼
┌─────────────────────────────────────────────┐
│         REPRESENT SHOP SCHEDULING STATE AS   │
│       STATE HYPERGRAPH USING HYPERGRAPH      │─ S120
└─────────────────────────────────────────────┘
                        │
                        ▼
┌─────────────────────────────────────────────┐
│     EXTRACT HYPERGRAPH-BASED JOB FEATURE FROM │
│ STATE HYPERGRAPH USING HYPERGRAPH NEURAL NETWORK │─ S130
└─────────────────────────────────────────────┘
                        │
                        ▼
┌─────────────────────────────────────────────┐
│            DETERMINE ACTION TO CHANGE         │
│       SHOP SCHEDULING STATE ACCORDING TO      │
│  HYPERGRAPH-BASED JOB FEATURE USING POLICY NETWORK │─ S140
└─────────────────────────────────────────────┘
                        │
                        ▼
                    ( END )
```

FIG. 2

200

| MACHINE | ▲ OPERATION | MACHINE DOWN | JOB ALLOCATION |
| --- | --- | --- | --- |

(a) HYPERGRAPH STATE  (b) OPERATION ALLOCATION  (c) SECOND MACHINE DOWN

EP 4 475 052 B1

# FIG. 3

START

SPLICE HYPERGRAPH-BASED JOB FEATURE INTO
THE HYPERGRAPH-BASED MACHINE FEATURE ACCORDING TO
THE PROCESSING/BEING PROCESSED RELATIONSHIP BETWEEN
THE PLURALITY OF MACHINES AND THE PLURALITY OF JOB TASKS
— S310

COMBINE THE HYPERGRAPH-BASED MACHINE FEATURE AND
THE MACHINE CONSTRAINT RELATIONSHIP-BASED MACHINE FEATURE
CORRESPONDING TO THE SHOP SCHEDULING STATE INTO
A COMBINED MACHINE FEATURE
— S320

SPLICE THE COMBINED MACHINE FEATURE AND
THE COMBINED JOB FEATURE INTO
CANDIDATE DECISION ACTION FEATURE
— S330

INPUT THE CANDIDATE DECISION ACTION FEATURE TO
THE DECISION NETWORK TO DETERMINE AN ACTION TO
CHANGE THE SHOP SCHEDULING STATE
— S340

END

FIG. 4

```
                        ( START )
                            │
                            ▼
┌──────────────────────────────────────────────┐
│   AVERAGE THE HYPERGRAPH-BASED JOB FEATURE TO  │
│ GENERATE HYPERGRAPH-BASED STATE HYPERGRAPH FEATURE │──── S410
└──────────────────────────────────────────────┘
                            │
                            ▼
┌──────────────────────────────────────────────┐
│    SPLICE THE CANDIDATE DECISION ACTION FEATURE AND    │
│ THE STATE HYPERGRAPH FEATURE AND INPUT THE SPLICED FEATURES TO │──── S420
│  A VALUE NETWORK TO OBTAIN A STATE VALUE IN A CURRENT STATE │
└──────────────────────────────────────────────┘
                            │
                            ▼
                        (  END  )
```

# FIG. 5

FIG. 6

CANDIDATE DECISION ACTION FEATURE

FC

SELF ATTENTION

FC

KNNG

...

...

...

softmax

P(action)

⊕

MLP

VALUE

600

HYPERGRAPH-BASED STATE HYPERGRAPH FEATURE

EP 4 475 052 B1

# FIG. 7

FIG. 8

800

FLEXIBLE JOB SHOP SCHEDULING APPARATUS

| OBTAINING MODULE | STATE FEATURE EXTRACTION MODULE | ACTION DECISION MODULE |
|---|---|---|

810          820          830

## FIG. 9

900

FLEXIBLE JOB SHOP SCHEDULING SYSTEM

| COMPUTING DEVICE | STORAGE DEVICE |

910                    920

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113093367 B